Europäisches Patentamt

European Patent Office

Office européen des brevets

(11) Veröffentlichungsnummer: **0 285 605**
**B1**

(12) **EUROPÄISCHE PATENTSCHRIFT**

(45) Veröffentlichungstag der Patentschrift: **05.09.90**

(21) Anmeldenummer: **87900088.3**

(22) Anmeldetag: **26.11.86**

(86) Internationale Anmeldenummer:
**PCT/EP86/00681**

(87) Internationale Veröffentlichungsnummer:
**WO 87/03714 18.06.87 Gazette 87/13**

(51) Int. Cl.⁵: **F 16 H 63/34, F 16 H 59/02**

(54) **VERRIEGELUNGSEINRICHTUNG FÜR SCHALTSTANGEN.**

(30) Priorität: **06.12.85 PCt/ep85/00680**

(43) Veröffentlichungstag der Anmeldung:
**12.10.88 Patentblatt 88/41**

(45) Bekanntmachung des Hinweises auf die
Patenterteilung:
**05.09.90 Patentblatt 90/36**

(84) Benannte Vertragsstaaten:
**DE FR GB SE**

(56) Entgegenhaltungen:
**GB-A- 9 947**
**US-A-1 601 048**
**US-A-1 719 520**
**US-A-2 748 910**
**US-A-3 292 451**

(73) Patentinhaber: **ZAHNRADFABRIK FRIEDRICHSHAFEN AKTIENGESELLSCHAFT Löwentaler Strasse 100 Postfach 2520 D-7990 Friedrichshafen 1 (DE)**

(72) Erfinder: **IRLBACHER, Wolfgang Schuberstrasse 14 D-7991 Eriskirch (DE)**
Erfinder: **BURI, Gerhard Brunnenstrasse 14 D-7990 Friedrichshafen (DE)**

(74) Vertreter: **Raue, Reimund Zahnradfabrik Friedrichshafen AG Löwentaler Strasse 100 Postfach 2520 D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Diese Erfindung betrifft eine Verriegelungseinrichtung für Schaltstangen nach dem Oberbegriff von Anspruch 1.

Stand der Technik

Es ist bekannt, bei Zahnräder-Wechselgetrieben zu deren Schutz Vorkehrungen zu treffen, daß immer nur ein Gang eingelegt ist. Damit wird nur eine der Schaltstangen, die zum Verschieben von Zahnrädern oder Schaltkupplungen mit Schaltgabeln oder Schaltschwingen in Verbindung oder Wirkverbindung stehen, aus der Neutrallage heraus verschoben, während die übrigen, den nicht geschalteten Gängen der anderen Gassen zugeordneten Schaltstangen in der Neutrallage verriegelt werden.

Die bekanntesten Verriegeleinrichtungen bestehen aus den mit Rastnuten oder Bohrungen versehenen Schaltstangen mit quer dazu in Bohrungen im Betriebegehäuse angeordneten und unter Federkraft stehenden Sperrkörpern.

Solche Einrichtungen sind aber nur sinnvoll, wenn die Schaltstangen, wie aus der DE—AS 10 16 997 oder DE—GM 81 22 31.8 zu ersehen, relativ nah beeinander und in einer Ebene liegen.

Bei modernen Getrieben, bei denen die Schaltstangen nach ihrer Hauptfunktion und damit im oberen Getrieberaum verstreut angeordnet sind, ist es auch schon bekannt—ZF-Synchroma-Getriebe S 5—16 (G 10 48 R-KB 11/83 d) Reparaturanleitung Abbildung 39 eine Verriegelungsplatte in einer Verriegeleinrichtung nach dem Oberbegriff von Anspruch 1 zu verwenden.

Mit einer solchen Verriegelungsplatte können aber von einer Schaltstange immer nur maximal zwei weitere Schaltstangen verriegelt werden, was für noch mehr Gänge aufweisende Getriebe, die nicht mit einer HH-Schaltung geschaltet werden, nicht ausreicht.

Aufgabe:

Es ist deshalb Aufgabe der Erfindung, eine Verriegeleinrichtung nach dem Oberbegriff von Anspruch 1 weiterzuentwickeln, daß noch mehr als zwei Gassen verriegelt werden können.

Eine Rasteinrichtung mit drei Schaltstangen, die nicht in einer Ebene liegen, sind aus der US—A—1 601 048 bekannt. In dieser Einrichtung werden beim Verschieben einer Schaltstange in eine Gangstellung die beiden anderen Schaltstangen in der Neutralstellung verriegelt, so daß immer nur ein Gang geschaltet ist und die Verriegelung der anderen Schaltstangen von der jeweils geschalteten Schaltstange bewirkt wird. Nach dieser Einrichtung müssen aber die Schaltstangen definiert zueinander angeordnet sein und es sind auch nur zwei Schaltstangen verriegelbar.

Diese Aufgabe wird mit den kennzeichnenden Merkmalen von Anspruch 1 erfüllt.

Lösung:

Während die Verriegelungsplatte nach dem Stand der Technik beim Gassenwechsel nur verschoben wird, kann die Verriegelungsplatte nach der Erfindung verschoben oder um einen Drehpunkt verschwenkt oder auch verschoben und verschwenkt werden. Dadurch ist es möglich, mit einer Schaltstange über die Verriegelungsplatte mehr als zwei weitere Schaltstangen in der Neutrallage zu sperren.

Werden zusätzlich Sperrkanten an der Verriegelungsplatte so angeordnet, daß sie in Richtung auf den Schwenkpunkt zu zeigen, wird die Verschieb- und Schwenkbarkeit der Verriegelungsplatte erhöht und die Sperrung der nicht an der Schaltung beteiligten Schaltstangen erleichtert.

Dem gleichen Ziel dient auch die Bemessung des Langloches, weil die Erstreckung in Richtung der Schaltstangen liegt und die Führung auf dem Führungsbolzen in der anderen, also um 90° versetzten Richtung spielfrei erfolgt, ist es möglich, über kleine Wege die Verschiebung der Verriegelungsplatte zu bewirken. In Verbindung mit zwei Sperrkanten pro Schaltstange, die auch als Führungskanten wirken, wird insbesondere eine Schwenkbewegung der Verriegelungsplatte erleichtert.

Bis auf die Berührung des Führungsbolzens in einer Richtung im Langloch entsteht kein weiterer Kontakt zwischen den Halteschrauben und der Verriegelungsplatte, da diese ausschließlich von jeweils einer Schaltstange verschoben und verschwenkt wird und von allen übrigen Schaltstangen in jeder den gewählten Gassen zugeordneten Stellungen gehalten wird.

Wird die Verriegelungsplatte mit Druchbrüchen für einzelne Schaltstangen ausgeführt, lassen sich zwei Sperrkanten pro Schaltstange, wovon eine auch auf den Drehpunkt zu zeigen, soll, gut anordnen. Eine besonders einfache Lösung wird erzielt, wenn der Führungsbolenz Bestandteil einer Halteschraube ist, weil über die Gesamterstreckung der Verriegelungsplatte drei Halteschrauben sinnvoll sind und damit eine Doppelfunktion dieser Halteschraube erzielt wird.

Soll die Verriegelungsplatte im Bereich einer Gehäuseabdeckung angeordnet werden, so kann anstelle der Befestigung über Halteschrauben die Anordnung in einer Aussparung, die durch einen Deckel verschlossen wird, eine einfache Lösung sein.

Weitere Einzelheiten der Erfindung werden anhand von Ausführungsbeispielen und Zeichnungen erläutert.

Es zeigen:

Fig. 1 die Anordnung der Verriegelungseinrichtung im Getriebegehäuse mit der Verriegelungsplatte in Vorderansicht;

Fig. 2 eine Draufsicht auf die Verriegelungsplatte;

Fig. 3 bis Fig. 5 weitere Stellungen der Verriegelungsplatte;

Fig. 6 eine Verriegelungsplatte in einer Aussparung im Getriebegehäuse.

Figurenbeschreibung:

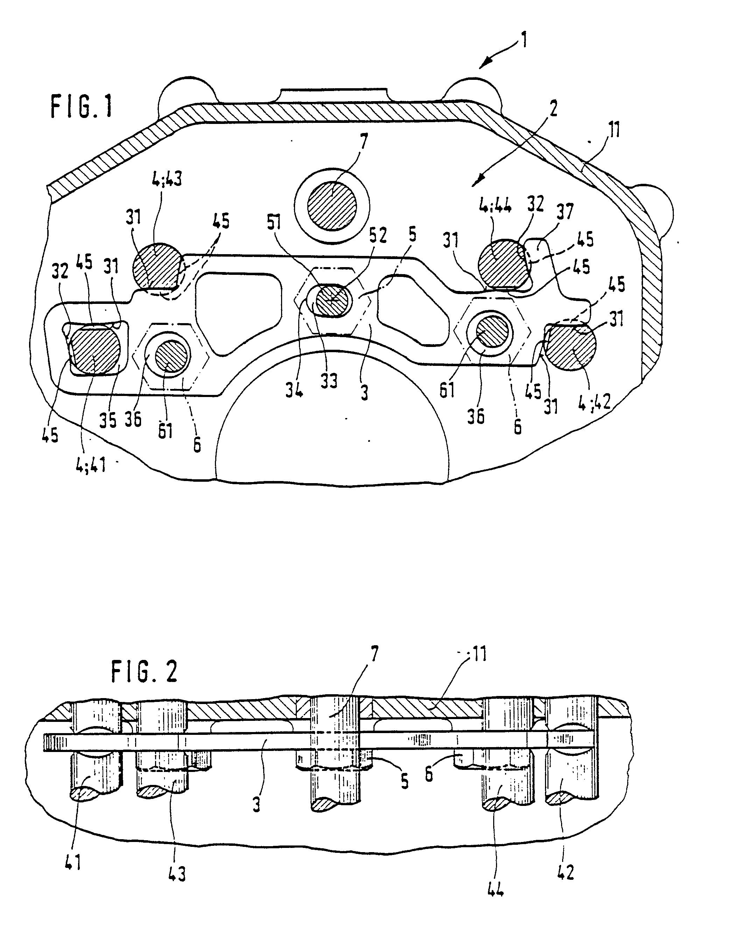

Die Fig. 1 zeigt einen Teilschnitt quer durch das Zahnräder-Wechselgetriebe 1 im Bereich von vier Schaltstangen 4—41 bis 44—und der Verriegelungsplatte 3, die über Halteschrauben 6 mit geringem Spiel am Getriebegehäuse 11 gehalten ist. Die Durchbrüche 36 sind so groß bemessen, daß sie in keiner Stellung der Verriegelungsplatte 3 an dem Schaft 61 der Halteschraube 6 zur Anlage kommt. Die Verriegelungsplatte 3 erstreckt sich in Richtung der Schaltstangen 41 bis 44 und hat zwischen jeweils zwei Schaltstangen 41, 43 und 42, 44 etwa in der Mitte ein in der gleichen Richtung sich erstreckendes Langloch 33 und ist in diesem um einen Führungsbolzen 51, der im Getriebegehäuse 11 befestigt ist, verschwenkbar und auf diesen auch verschiebbar. Der Führungsbolzen 51 kann auch Teil einer dritten Halteschraube 5 sein. Die Begrenzung 34 in Längsrichtung des Langloches 33 ist so bemessen, daß die Einstellung der Verriegelungsplatte 3 durch die Schaltstangen 4 nicht behindert wird. Die Schaltstangen 41 bis 44 haben zumindest im Bereich der Verriegelungsplatte 3 Sperrnuten 45, die der Neutralstellung der Schaltstangen 41 bis 44 zugeordnet sind. Mit 7 ist die mit dem nicht dargestellten Schalthebel in Wirkverbindung stehende Wähl- und Schaltwelle bezeichnet. Sie überträgt die Wähl- und Schaltbewegung in bekannter Weise auf die Schaltstangen 41 bis 44. Die Verriegelungsplatte 3 hat Sperrkanten 31 und 32, wobei die Sperrkanten 31 in bekannter Weise nach außen, nach oben oder nach unten weisend angeordnet sind. Die Sperrkanten 32 weisen hingegen nach innen und sind im Bereich eines Durchbruches 35 oder einer Nase 37 angeordnet.

In der Draufsicht auf die Verriegelungsplatte 3 nach Fig. 2 ist mit 11 das Getriebegehäuse, in dem die Wähl- und Schaltwelle 7, die Schaltstangen 41 bis 44 gelagert und die Verriegelungsplatte 3 gehalten ist—Halteschrauben 6, 5—bezeichnet.

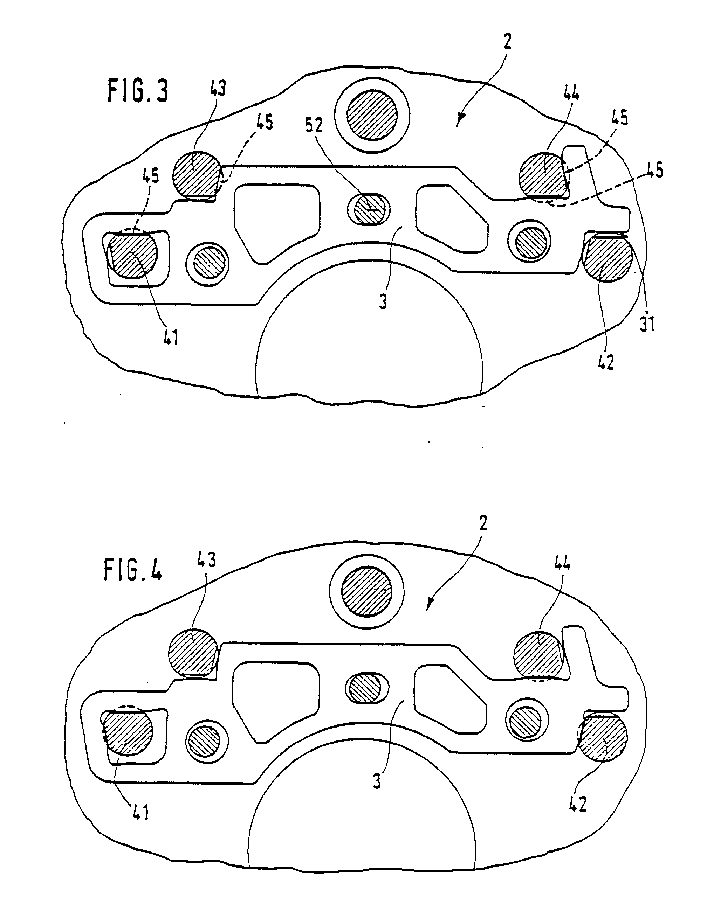

Die Fig. 3 bis 5 zeigen schematisch die weiteren Stellungen der Verriegelungsplatte 3, so wie sie sich bei der Stellung der Schaltstangen 41 bis 44 in den jeweiligen Gassenstellungen ergeben.

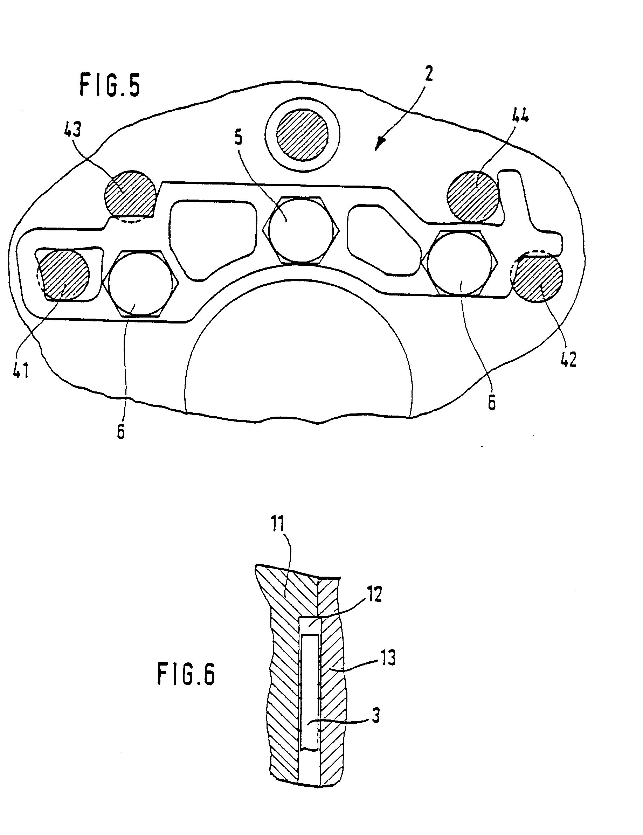

In Fig. 6 ist eine Anordnung der Verriegelungsplatte 3 in einer Aussparung 12 im Getriebegehäuse 11 dargestellt, die immer dann sinnvoll ist, wenn das Zahnräder-Wechselgetriebe 1 einen Getriebeabschlußdeckel 13 in diesem Bereich hat.

Wirkbeschreibung:
Die Verriegelungseinrichtung 2 wirkt wie folgt:
In der Fig. 1 ist die Verriegelungsplatte 3 in der Stellung dargestellt, in der die Schaltstange 41 der Gänge 1 und 2 aus der Neutralstellung heraus in einen der Gänge 1 oder 2 verschoben ist. Über die Sperrkanten 31 und 32 im Durchbruch 35 und dem vollen Durchmesser der Schaltstange 41—also außerhalb der Sperrnuten 45—wird dabei die Verriegelungsplatte 3 in einer linken und in Bezug auf die linke Seite der Verriegelungsplatte 3 bezogen unteren Endstellung gehalten. Mindestens eine der mit jeder Schaltstange 41 bis 44 zusammenwirkenden Sperrkanten 31, 32 sperren in dieser Stellung die anderen Schaltstangen 42 bis 44 der Gänge 3, 4; 5, 6 und R über die Sperrnuten 45 in der Neutrallage. Erst wenn die Schaltstange 41 wieder aus einer der Gangendstellungen der Gänge 1 oder 2 in die Neutralstellung zurückgeführt ist, ist es möglich, eine der anderen Schaltstangen 42 bis 44 zur Einlegung eines Ganges zu verschieben.

In der in der Fig. 3 dargestellten Lage der Verriegelungsplatte 3 ist einer der Gänge 3 oder 4 eingelegt und damit die Schaltstange 42 nicht mehr in der Neutralstellung. Die markierte Sperrkante 31 ist von der Schaltstange 42 nach oben gedrückt worden, so daß sich in der linken Endstellung der Verriegelungsplatte 3 noch eine Drehung um den Dreh- und Schwenkpunkt 52 ergeben hat. In dieser Stellung sind die Schaltstangen 41, 43 und 44 über mindestens eine der Sperrkanten 31, 32 in den Sperrnuten 45 festgehalten.

Die Fig. 4 zeigt die geschaltete Schaltstange 43 und die gesperrten Schaltstangen 41, 42, 44. Die Verriegelungsplatte 3 ist dabei von der Schaltstange 43 in eine rechte Endstellung gedrückt worden.

In Fig. 5 ist in der schon beschriebenen Weise nunmehr die Schaltstange 44 aus der Neutrallage heraus bewegt und der R.-Gang geschaltet und die Schaltstangen 41, 42 und 43 können nicht verschoben werden. Die Verriegelungsplatte 3 nimmt eine rechte und bezogen auf die rechte Hälfte untere Endstellung ein. Zusätzlich sind in dieser Fig. die Halteschrauben 5 und 6 angedeutet, die Verriegelungsplatte 3 wird durch diese Schrauben in axialer Richtung gehalten, wobei nur ein Bolzen oder Schaft der Halteschraube 5 eine Führungsfunktion für die Verschiebe- oder Dreh- und Schwenkbewegung der Verriegelungsplatte 3 hat.

Die Verschiebe-, Dreh- oder Schwenkbewegung oder auch überlagerte Verschiebe- und Schwenkbewegung wird ausschließlich von der jeweiligen aus der Neutralstellung heraus bewegten Schaltstange 41 bis 44 bewirkt, wobei die jeweils restlichen Schaltstangen 41 bis 44 in ihren Sperrnuten 45 die Verriegelungsplatte 3 abstützen.

Bezugszeichen
  1   Zahnräder-Wechselgetriebe
 11   Getriebegehäuse
 12   Aussparung
 13   Getriebegehäusedeckel
  2   Verriegeleinrichtung
  3   Verriegelungsplatte
 31   Sperrkanten
 32   Sperrkanten
 33   Langloch
 34   Begrenzung in Längsrichtung
 35   Durchbruch
 36   Durchbruch
  4   Schaltstangen
 41   Schaltstange der Gänge 1, 2
 42   Schaltstange der Gänge 3, 4
 43   Schaltstange der Gänge 5, 6
 44   Schaltstange des R.-Ganges
 45   Sperrnuten
  5   Halteschraube
 51   Führungsbolzen
 52   Dreh- und Schwenkpunkt

6  Halteschrauben
61  Schaft
7  Wähl- und Schaltwelle

## Patentansprüche

1. Verriegeleinrichtung (2) für Schaltstangen (4), die nach ihrer Hauptfunktion verstreut im oberen Getrieberaum von Zahnräderwechselgetrieben (1) angeordnet sind mit einer quer zu den Schaltstangen am Getriebegehäuse (11) gehaltenen Verriegelungsplatte (3), die begrenzt von der jeweils in die geschaltete Stellung gebrachten Schaltstange (4) verschoben wird und die anderen Schaltstangen (4) in der Neutralstellung über Sperrkanten (31) an der Verriegelungsplatte (3) und Sperrnuten (45) an den Schaltstangen (4) verriegelt werden, dadurch gekennzeichnet, daß die Verriegelungsplatte (3) ein in Längsrichtung der-selben sich erstreckendes und etwa mittig angeordnetes Langloch (33) aufweist und um einen in diesem Langloch angeordneten und am Getriebegehäuse (11) befestigten Führungsbolzen (51) verschoben und geschwenkt wird und daß in Längsrichtung zu beiden Seiten dieses Langloches (33) je zwei Schaltstangen (41, 43; 42, 44) angeordnet sind und jede Schaltstange mit jeweils zwei Sperrkanten (31, 32) der Verriegelungsplatte zusammenwirken.

2. Verriegeleinrichtung nach Anspruch 1, dadurch gekennzeichnet, daß mindestens eine Sperrkante (32) an der Verriegelungsplatte (3) in Richtung auf den vom Führungsbolzen (51) gebildeten Dreh- und Schwenkpunkt (52) zu angeordnet ist, sodaß die Sperrkante selbst sich in diese Richtung erstreckt.

3. Verriegeleinrichtung nach Anspruch 1 oder 2, dadurch gekennzeichnet, daß der Durchmesser des Führungsbolzens (51) in zwei Richtungen im Langloch (33) spielfrei gelagert ist und die Begrenzung (34) des Langloches (33) in Längsrichtung in keiner Verschiebestellung der Verriegelungsplatte (3) diese Verschiebung begrenzt.

4. Verriegeleinrichtung nach Anspruch 1, dadurch gekennzeichnet, daß zwei der Sperrkanten (31, 32) in mindestens einem Durchbruch (35) angeordnet sind, durch den wenigstens eine Schaltstange (41) hindurchgeführt ist.

5. Verriegeleinrichtung nach Anspruch 4, dadurch gekennzeichnet, daß als Führungsbolzen (51) eine mit einem Bund versehene Halteschraube (5) angeordnet ist, die in einer zweiten Funktion die Verriegelungsplatte (3) in Achsrichtung der Schaltstangen (41 bis 44) führt.

6. Verriegeleinrichtung nach Anspruch 5, dadurch gekennzeichnet, daß noch zwei weitere Halteschrauben (6) in Durchbrüchen (36) der Verriegelungsplatte (3) angeordnet sind und die Bewegung dieser Verriegelungsplatte (3) nur in Achsrichtung der Schaltstangen (41 bis 44) begrenzt.

7. Verriegelungseinrichtung nach einem der Anspruch 1, dadurch gekennzeichnet, daß die Verriegelungsplatte (3) in einer Aussparung (12) im Getriebegehäuse (11) angeordnet ist, die von einem Getriebedeckel (13) oder einer Abdeckplatte begrenzt wird.

## Revendications

1. Dispositif (2) de blocage de tringles de changement de vitesses (4) qui sont dispersées dans la zone supérieure d'une boîte de vitesses (1) à engrenages, le dispositif comportant une plaque de blocage (3) maintenue contre le carter (11) de la boîte, transversalement par rapport aux tringles, de manière que lorsqu'une tringle (4) est mise en position d'enclenchement, elle déplace la plaque dans une mesure limitée et les autres tringles (4) sont bloquées en position neutre par des bords d'arrêt (31) ménagés sur la plaque (3) et des encoches d'arrêt (45) ménagées dans les tringles (4), caractérisé en ce que la plaque de blocage (3) comporte un trou oblong (33) situé approximativement en son milieu et s'étendant dans une direction longitudinale, la plaque étant capable de coulisser et de pivoter autour d'une cheville de guidage (51) disposée dans ce trou oblong et fixée au carter (11), et en ce que deux tringles (41, 43; 42, 44) sont situées de chaque côté de ce trou oblong (33), suivant sa direction longitudinale, chaque tringle coopérant avec deux bords d'arrêt respectifs (31, 32) de la plaque de blocage.

2. Dispositif selon la revendication 1, caractérisé en ce qu'au moins un bord d'arrêt (32) est disposé sur la plaque de blocage (3) en direction du point de rotation et de pivotement (52) formé par la cheville de guidage (51), de sorte que le bord d'arrêt lui-même s'étend dans cette direction.

3. Dispositif selon la revendication 1 ou 2, caractérisé en ce que le diamètre de la cheville de guidage (51) est ajusté sans jeu dans deux directions dans le trou oblong (33) et en ce que les extrémités (34) du trou oblong (33) ne limitent le coulissement longitudinal de la plaque (3) dans aucune position de déplacement de cette plaque.

4. Dispositif selon la revendication 1, caractérisé en ce que deux des bords d'arrêt (31, 32) sont situés dans au moins un orifice (35) à travers lequel passe au moins une tringle (41).

5. Dispositif selon la revendication 4, caractérisé en ce que la cheville de guidage (51) est formée par une vis de retenue (5) pourvue d'un épaulement et ayant une seconde fonction consistant à retenir la plaque (3) dans la direction axiale des tringles (41 à 44).

6. Dispositif selon la revendication 5, caractérisé en ce que deux autres vis de retenue (6) sont disposées dans des orifices (36) de la plaque (3) et ne limitent le déplacement de cette plaque (3) que dans la direction axiale des tringles (41 à 44).

7. Dispositif selon la revendication 1, caractérisé en ce que la plaque (3) est disposée dans un évidement (12) ménagé dans le carter (11) et fermé par un couvercle de boîte (13) ou par une plaque de recouvrement.

## Claims

1. Locking device (2) for gear-changing rods (4), which are mounted according to their main function distributed in the upper gearbox space of gear-changing systems (1), having a locking plate (3) held transverse to the gear-changing rods on the gearbox casing (11), the locking plate being moved in a limited manner by the gear-changing rod (4) in each case brought into the changed position, and the other gear-changing rods (4) being locked in the neutral position via locking edges (31) on the locking plate (3) and locking grooves (45) on the gear-changing rods (4), characterised in that the locking plate (3) has an approximately centrally located slot (33) extending in the longitudinal direction thereof and is moved and pivoted about a guide pin (51) mounted in said slot and fixed to the gearbox casing (11), and in that two gear-changing rods (41, 43; 42, 44) in each case are mounted in the longitudinal direction on both sides of said slot (33) and each gear-changing rod cooperates with two locking edges (31, 32) of the locking plate in each case.

2. Locking device according to claim 1, characterised in that at least one locking edge (32) is mounted on the locking plate (3) in the direction of the rotary and pivotal point (52) formed by the guide pin (51), so that the locking edge itself extends in this direction.

3. Locking device according to claim 1 or 2, characterised in that the diameter of the guide pin (51) is mounted without play in two directions in the slot (33) and the stop (34) of the slot (33) does not limit the displacement of the locking plate (3) in the longitudinal direction in any of its displacement positions.

4. Locking device according to claim 1, characterised in that two of the locking edges (31, 32) are mounted in at least one aperture (35), through which at least one gear-changing rod (41) is guided.

5. Locking device according to claim 4, characterised in that as a guide pin (51) a holding screw (5) provided with a collar is mounted, which in a second function guides the locking plate (3) in the axial direction of the gear-changing rods (41 to 44).

6. Locking device according to claim 5, characterised in that two further holding screws (6) are mounted in apertures (36) in the locking plate (3) and only limit the movement of said locking plate (3) in the axial direction of the gear-changing rods (41 to 44).

7. Locking device according to claim 1, characterised in that the locking plate (3) is mounted in a recess (12) in the gearbox casing (11), which is defined by a gearbox cover (13) or a cover plate.

EP 0 285 605 B1

FIG.1

FIG. 2

1

FIG.3

FIG.4

FIG.5

FIG.6